# EUROPÄISCHE PATENTSCHRIFT

(11) **EP 0 903 941 B1**
(45) Veröffentlichungstag und Bekanntmachung des Hinweises auf die Patenterteilung: **31.03.2004**
(21) Anmeldenummer: 98440199.2
(22) Anmeldetag: 07.09.1998
(51) Int. Cl.: H04N 7/173

(54) **Einrichtung zum Zuweisen von Übertragungskanälen an Endstellen eines Dienste-auf-Abruf Systems**
Device for allocating transmission channels to terminals in a service-on-demand system
Système d'attribution de voies de communication pour équipements terminal d'un système de service à la demande

(30) Priorität: 23.09.1997 DE 19741885
(43) Veröffentlichungstag der Anmeldung: 24.03.1999
(73) Patentinhaber: ALCATEL, 75008 Paris (FR)
(72) Erfinder: Cesar, Bozo, 70806 Kornwestheim (DE); Keil, Klaus, 73730 Esslingen (DE); Riemer, Joachim, 70825 Korntal (DE)
(74) Vertreter: Menzietti, Domenico, Dipl.-Ing

(56) Entgegenhaltungen:
- EP-A- 0 698 998
- CHANG Y -H: "AN OPEN-SYSTEMS APPROACH TO VIDEO ON DEMAND" IEEE COMMUNICATIONS MAGAZINE, Bd. 32, Nr. 5, 1. Mai 1994, Seiten 68-80, XP000451097 New York, NY, US

## Beschreibung

Die Erfindung betrifft eine Einrichtung zum Zuweisen von Übertragungskanälen an Endstellen eines Dienste-auf-Abruf Systems nach dem Oberbegriff des Patentanspruchs 1.

Ein Dienste-auf-Abruf System ist beispielsweise aus der Zeitschrift Elektronik 5/1995, Seiten 50 bis 58 bekannt. Das Dienste-auf-Abruf System beinhaltet einen Server, der über eine ATM-Kopplung mit mehreren HUBs verbunden ist, die ihrerseites mit mehreren BONTs verbunden sind; BONT = Broadband Optical Network Termination. An jedem BONT sind über eine gemeinsame Koaxialkabelleitung 64 Endstellen angeschlossen. Zum Abruf eines Dienstes fordert eine Endstelle mittels ihrer Set-Top Box einen Verbindungsaufbau beim Server an. Der Server stellt der Endstelle einen Übertragungskanal bereit, über den der abgerufene Dienst zunächst auf optischen Wege bis zum BONT und anschließend auf elektrischen Wege bis zur Endstelle gelangt. Üblicherweise sind für jeden BONT eine bestimmte Anzahl von Übertragungskanälen reserviert, beispielsweise sind dem ersten BONT die Übertragungskanäle 1 bis 32 zugeordnet, dem zweiten BONT die Übertragungskanäle 33 bis 64, etc.. Dies ist eine starre Aufteilung, die zusätzlich jeder Endstelle nur die gleiche Übertragungskapazität zur Verfügung stellt. Dadurch können z.B. auch in jeder Gruppe nur maximal 32 der 64 mit dem BONT verbundenen Endstellen gleichzeitig Dienste abrufen. Für den Fall des Ausbaus des Systems, z.B. durch Anschluß weiterer Set-Top Boxen an einen bereits vorhandenen BONT, muß das gesamte System abgeschaltet werden, um die Aufteilung der Übertragungskanäle auf die Endstellen und die Gruppen neu zu konfigurieren.

Es ist daher eine Aufgabe der Erfindung die Zuweisung von Übertragungskanälen an Endstellen eines Dienste-auf-Abruf Systems derart zu gestalten, daß die vorstehenden Nachteile nicht auftreten.

Erfindungsgemäß wird diese Aufgabe durch eine Einrichtung gemäß Patentanspruch 1 gelöst. Die Einrichtung ist inbesondere dadurch gekennzeichnet, daß sie eine variable Zuordnung zwischen Übertragungskanälen und Endstellen vorsieht, unabhängig von der Gruppenzugehörigkeit der Endstellen. Für z.B. 64+64=128 Endstellen, die in zwei Gruppen über zwei BONTs verteilt sind, sind 64 Übertragungskanäle vorgesehen. Die Übertragungskanäle sind nicht fest auf die beiden Gruppen verteilt, sondern weitgehend für alle Endstellen frei verfügbar. So kann z.B. Übertragungskanal 1 durch Endstelle 1 aus Gruppe 1 und und Übertragungskanal 2 durch Endstelle 25 aus Gruppe 2 belegt sein. Um jeder Gruppe eine Mindestanzahl an frei verfügbaren Übertragungskanälen reservieren zu können, sind beispielsweise 16 der 64 Übertragungskanäle als Mindestanzahl für Gruppe 1 reserviert und weitere 16 der 64 Übertragungskanäle als Mindestanzahl für Gruppe 2 reserviert. Die verbleibenden 32 Übertragungskanäle können dann je nach Verkehrsaufkommen und Bedarf sowohl von Endstellen der Gruppe 1 als auch von Endstellen der Gruppe 2 benutzt werden. Dies verschafft Freiräume und adaptiert die Zuweisung von Übertragungskanälen automatisch an das Verkehrsaufkommen. Ein zusätzlicher Vorteil besteht darin, daß jeder Endstelle mehr als ein Übertragungskanal zugewiesen werden kann, wodurch sich der Anwendungsbereich erweitert, z.B. können Dienste mit unterschiedlichen Übertragungskapazität, für z.B. unterschiedliche Bildqualitäten, zu unterschiedlichen Gebühren angeboten werden.

Bei einer vorteilhaften Ausgestaltung der Erfindung kann die Mindestanzahl der reservierten Übertragungskanäle dynamisch variiert werden. Dies verschafft den zusätzlichen Vorteil einer noch flexibleren Zuweisung von Übertragungskanälen. So können beispielsweise nach Inbetriebnahme eines neuen oder erweiterten Systems die Mindestanzahlen ohne Unterbrechung des Betriebs verändert und an das aktuelle Verkehrsaufkommen angepaßt werden, wodurch eine optimale Ausnutzung der verfügbaren Übertragungskapazität erreicht werden kann.

Bei einer weiteren vorteilhaften Ausgestaltung der Erfindung können die Übertragungkanäle im Speicher zeitweise virtuell gesperrt werden. Dies hat den Vorteil, daß auch während einer im Falle einer Störung eines oder mehrerer Übertragungskanäle erforderlichen Reparatur das System eingeschränkt betriebsbereit bleibt, indem lediglich die zu reparierenden Übertragungskanäle virtuell gesperrt werden und somit als belegt gelten.

Weitere vorteilhafte Ausgestaltungen der Erfindung sind den abhängigen Ansprüchen zu entnehmen.

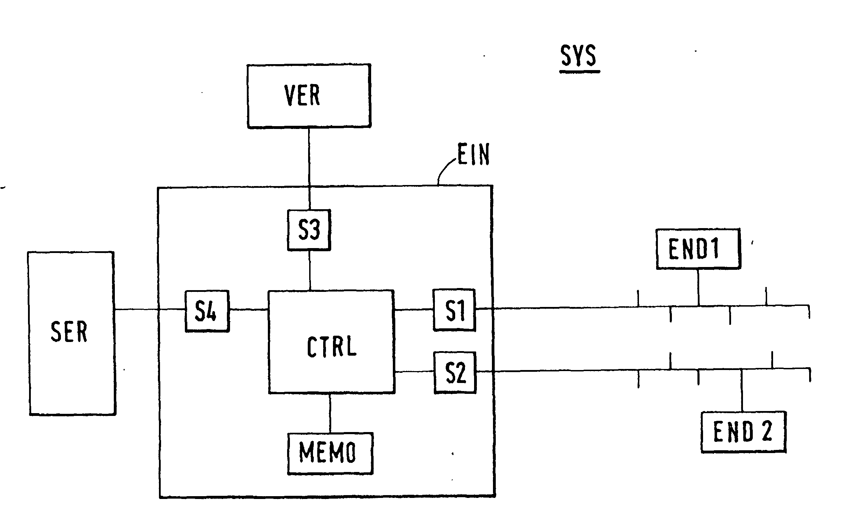

Ein Ausführungsbeispiel der Erfindung wird im folgenden unter Zuhilfenahme einer Figur erläutert. Die Figur zeigt eine schematische Darstellung eines Dienste-auf-Abruf Systems mit einer erfindungsgemäßen Einrichtung zum Zuweisen von Übertragungskanälen.

Das Dienste-auf-Abruf System SYS, ein sogenanntes Service-on-demand System, beinhaltet einen Server SER, eine Verwaltungseinheit VER, eine erfindungsgemäße Einrichtung EIN zum Zuweisen von Übertragungskanälen und mehrere Endstellen END1, END2.

Der Server SER ist über die Einrichtung EIN mit den mehreren Endstellen END1, END2 über eine Punkt-zu-Mehrpunkt Verbindung verbunden. Der Server SER dient dazu, den Endstellen END1, END2 Dienste zur Verfügung zu stellen. Als Dienste stehen bespielsweise Pay per View, Near Video on demand, Video on demand, Telelearning/Teleteaching, Informationsdienste, Teleshopping oder Telespiele zur Verfügung. Der Benutzer einer Endstelle END1, END2 wählt über einen Dekoder, eine sogenannte Set-Top Box einen Dienst aus, der ihm dann durch den Server SER zur Verfügung gestellt wird, z.B. durch Überspielen des abgerufenen Videofilms. Zum Überspielen benötigt der Server SER mindestens einen freien Übertragungskanal. Die Endstelle END1; END2 muß wissen, welcher Übertragungskanal vom Server SER benutzt wird, um den überspielten Videeofilm zu empfangen. Zum Zuweisen der Übertragungskanäle wird die Einrichtung EIN verwendet.

Die Einrichtung EIN zum Zuweisen von Übertragungskanälen an Endstellen END1, END2 beinhaltet mindestens zwei Schnittstellen S1, S2 zum Verbinden der Einrichtung EIN mit mehreren Endstellen END1, END2. Jede Schnittstelle S1, S2 ist über eine separate Leitung, z.B. eine Koaxialkabelleitung mit einer Gruppe von Endstellen END1, END2 verbunden. Die Schnittstellen S1 und S2 dienen jeweils der Protokollumsetzung, als Sendeinheit zur Übertragung von Informationen von der Einrichtung EIN zu den Endstellen END1, END2 und als Empfangseinheit zum Empfang von Informationen von den Endstellen END1, END2.

Die Einrichtung EIN beinhaltet ferner einen Speicher MEMO, in dem eine Zuweisungstabelle abgespeichert ist. Der Speicher MEMO ist beispielsweise ein sogenanntes RAM, EEPROM oder ein Flash. Die Zuweisungstabelle beinhaltet Einträge über aktuell verfügbare und aktuell belegte Übertragungskanäle zur Übertragung von von Endstellen END1, END2 abgerufenen Diensten. So gilt ein Übertragungskanal beispielsweise als belegt, wenn für eine individuelle Übertragung vom Server SER zu einer bestimmten Endstelle END1, END2 genutzt wird. So wird ein Übertragungskanal bei einer Video-on-demand Verbindung ausschließlich für eine bestimmte Endstelle END1, END2 zur Verfügung gestellt, um der Endstelle END1, END2 Operationen wie schnelles Vorspulen, schnelles Rückspulen oder Bildstop zu ermöglichen. Bei einer Near-Video-on-demand Verbindung kann ein Übertragungskanal auch von mehreren Endstellen END1, END2 gleichzeitig genutzt werden, da lediglich ein unidirektionaler Informationsfluß vom Server SER zu den Endstellen END1, END2 stattfindet. Der Übertragungkanal gilt dann solange als belegt, solange noch eine der an dem Dienst Near-Video-on-demand beteiligten Endstellen END1, END2 den Dienst in Anspruch nimmt oder die Übertragung abgeschlossen ist.

Die Zuweisungtabelle ist derart gestaltet, daß eine variable Zuordnung zwischen Übertragungskanälen und Endstellen END1, END2 möglich ist, und zwar unabhängig von der Gruppenzugehörigkeit der Endstellen. Dies soll einem Zahlenbeispiel verdeutlicht werden :
Die Gruppe 1, die an die Schnittstelle S1 angeschlossen ist, beinhaltet beispielsweise 10 Endstellen END1. Die Gruppe 2, die an die Schnittstelle S2 angeschlossen ist, beinhaltet beispielsweise 10 Endstellen END2. Es sind 10 Übertragungskanäle vorgesehen, um die 20 Endstellen END1, END2 zu versorgen. Aufgrund eines geschätzten Verkehrsaufkommen müßten 10 Übertragungskanäle ausreichen ohne daß es zu Engpässen kommt, da in der Regel nie mehr als 50% der Endstellen END1, END2 einer Gruppe gleichzeitg einen Dienst in Anspruch nehmen wollen. Somit wäre es ausreichend 5 ausgewählte Übertragungskanäle der Gruppe 1 zur freien Verfügung zuzuordnen und 5 weitere Übertragungskanäle der Gruppe 2. Bedingt durch statistische Toleranzen bei der Schätzung des Verkehraufkommens, die beispielsweise eine rege Inanspruchnahme von Diensten von Endstellen END1 der Gruppe 1 gegenüber einer zurückhaltenden Inanspruchnahme von Diensten von Endstellen END2 der Gruppe 2 außer Acht ließen, könnte es vorkommen, daß 8 der 10 Endstellen der Gruppe 1 einen Dienst in Anspruch nehmen wollen, während nur 2 der 10 Endstellen END2 der Gruppe 2 dies gleichzeitig wollten. Bei einer festen Zuordnung der Übertragungskanäle in 5 für Gruppe 1 und 5 für Gruppe 2 wäre dies nicht möglich. Aus diesem Grund ist eine variable Zuordnung der Übertragungskanäle gewählt, die lediglich 10 frei zuweisbare Übertragungskanäle für insgesamt 20 Endstellen END1, END2, unabhängig von einer Gruppenzugehörigkeit vorsieht, so daß auch 8 Endstellen END 1 der Gruppe 1 und 2 Endstellen END2 der Gruppe 2 gleichzeitig einen Dienst in Anspruch nehmen können. Zusätzlich kann auf diese Weise einer Endstelle END1, END2 auch mehr als ein Übertragungskanal, z.B. 2 oder 3 gleichzeitig zugewiesen werden.

Die Einrichtung EIN beinhaltet des weiteren eine Steuereinheit CTRL, die mit den Schnittstellen S1, S2 und dem Speicher MEMO verbunden ist. Die Steuereinheit CTRL ist beispielsweise ein Prozessor, z.B. ein sogenannter DSP oder ein Mikroprozessor. Die Steuereinheit CRTL ist geeignet, Verbindungsanforderungen von einzelnen Endstellen END1, END2 zum Abruf von Diensten zu empfangen. Dazu ist in der Steuereinheit CTRL eine Signalisierungseinheit vorgesehen. Die Signalisierungseinheit detektiert eine von einer Endstelle END1, END2 ausgesandte Verbindungsanforderung und schaltet daraufhin eine Steuerkanal zwischen Server SER und Endstelle END1, END2 frei, damit die Endstelle END1, END2 ihre gewünschten Dienst abrufen kann. Daraufhin weist die Steuereinheit CTRL der Endstelle END1, END2 mindestens einen Übertragungskanal zu, ausgewählt aus den im Speicher MEMO verfügbaren und in der Anzahl angepaßt an den abgerufenen Dienst. Der Endstelle END1, END2 kann dann der abgerufene Dienst über den oder die zugwiesenen Übertragungskanäle zur Verfügung gestellt werden. Zusätzlich wird der oder die zugewiesenen Übertragungskanäle im Speicher MEMO als belegt vermerkt.

Zugewiesen werden können nur Übertragungskanäle, die im Speicher MEMO als aktuell verfügbar gelten. Gelten alle Übertragungskanäle im Speicher MEMO als belegt, so wird den einzelnen Endstellen END1, END2 von der Steuereinheit CTRL mitgeteilt, daß momentan ein Verbindungsaufbau nicht möglich ist. Die Steuereinheit CTRL kann beispielsweise derart programmiert werden, daß sie nach einer Mitteilung an eine Endstelle END1, END2, daß ein Verbindungsaufbau nicht möglich ist, den Speicher MEMO überwacht und die entsprechende Endstelle END1, END2 informiert, sobald ein Übertragungskanal als unbelegt gilt und wieder zur Verfügung steht.

Die Steuereinheit CTRL ist geeignet, die Zuweisung der Übertragungskanäle derart durchzuführen, daß für jede Gruppe von Endstellen END1, END2 ein Minimalwert an zuweisbaren Übertragungskanälen nicht unterschritten und ein Maximalwert an zuweisbaren Übertragungskanälen nicht überschritten wird, wobei Minimalwert und Maximalwert ungleich sind. Ein Zahlenbeispiel soll dies verdeutlichen : Die Gruppe 1, die an die Schnittstelle S1 angeschlossen ist, beinhaltet beispielsweise 30 Endstellen END1. Die Gruppe 2, die an die Schnittstelle S2 angeschlossen ist, beinhaltet beispielsweise 30 Endstellen END2. Es sind 30 Übertragungskanäle vorgesehen, um die 60 Endstellen END1, END2 zu versorgen. 10 der 30 Übertragungskanäle werden stets freigehalten, damit sie für die Endstellen END1 der Gruppe 1 zur freien Verfügung stehen. 10 weitere der 30 Übertragungskanäle werden stets freigehalten, damit sie für die Endstellen END2 der Gruppe 2 zur freien Verfügung stehen. Es ist unwichtig, welche der 30 Übertragungskanäle freigehalten werden, wichtig ist ihre Absolutzahl. Die Absolutzahl 10 stellt den Minimalwert dar, der bei der Initialisierung des Systems SYS in die Steuereinheit CTRL eingebbar ist. Die verbleibenden 10 Übertragungskanäle können dann sowohl von Endstellen END1 der Gruppe 1 als auch von Endstellen END2 der Gruppe 2 genutzt werden, so daß sich ein Maximalwert von 20 Übertragungskanälen für jede Gruppe ergibt. Der Maximalwert kann bei der Initialisierung des Systems SYS in die Steuereinheit CTRL eingegeben werden, z.B. manuell über eine Tastatur. Für den Fall, daß aus einer Gruppe von Endstellen END1; END2 mehr Übertragungskanäle angefordert werden, als durch den Maximalwert vorgegeben sind, z.B. 21 statt 20, und zur gleichen Zeit aber nur beispielsweise 5 der 10 Übertragungskanäle, die für die andere Gruppe vorgesehen sind belegt sind, gilt der angeforderte 21. Übertragungskanal für die erste Gruppe als belegt, obwohl noch 5 Übertragungskanäle zur freien Verfügung stehen, allerdings lediglich für die zweite Gruppe, so daß sie für die erste Gruppe gesperrt sind. Für jede Gruppe von Endstellen END1; END2 steht stets eine minimale Anzahl von Übertragungskanälen zur freien Verfügung, im Beispiel 10.

Die Steuereinheit CTRL kann beispielsweise derart programmiert werden, daß sie geeignet ist, die Minimalwerte und/oder die Maximalwerte dynamisch zu verändern; z.B. können durch die Steuereinheit CTRL nach der Initialisierungsphase das tatsächliche Verkehrsaufkommen überwacht und die Minimalwerte und die Maximalwerte daran angepaßt werden. Die dynamsiche Veränderungen der Minimalwerte und der Maximalwerte erfolgt ohne Unterbrechung des Betriebs, indem beispielsweise mittels einer Tastatur softwaretechnisch die Werte programmiert werden oder die Steuereinheit CRTL derart programmiert wird, daß sie die Anpassung automatisch durchführt. Letzteres wird beispielsweise dadurch realisiert, daß die Steuereinheit über einen festen Zeitraum, z.B. eine Woche, stets die Anzahl der gleichzeitig von einer Gruppe belegten Übertragungskanäle vermerkt und anschließend die maximale Anzahl der aufgetretenen Belegungen als Minimalwert für die jeweilige Gruppe neu festlegt.

Des weiteren kann die Steuereinheit CTRL derart programmiert werden, daß sie geeignet ist, einzelne Übertragungkanäle oder Gruppen von Übertragungskanälen im Speicher MEMO zeitweise virtuell zu sperren, so daß diese Übertragungskanäle als belegt gelten. Dies hat den Vorteil, daß z.B. im Falle einer Reparatur eines Übertragungskanal nicht das gesamte System abgeschaltet werden muß, sondern lediglich der zu reparierende Übertragungskanal für alle Endstellen END1, END2 bzw. für eine Gruppe von Endstellen für die Dauer der Reparatur nicht zur Verfügung steht. Den Endstellen END1, END2 stehen damit während einer Reparatur eines Übertragungskanals z.B. 19 der 20 Übertragungskanäle weiterhin zur Verfügung. Durch virtuelles Sperren und Freischalten von Übertragungskanälen kann auch auf einfache Art und Weise die Kapazität der für eine bestimmte Anzahl von Endstellen END1, END2 zur Verfügung stehenden Übertragungskanäle variiert werden. Wird das System z.B. erweitert, z.B. durch Anschluß zusätzlicher Endstellen END1, END2 oder durch zur Verfügung Stellung weiterer, möglicherweise Übertragungskapazität intensiverer Dienste, so kann die Anzahl der Übertragungskanäle an das dann angewachsene Verkehrsaufkommen angepaßt werden, indem zusätzlich bereitgestellte Übertragungskanäle freigeschaltet werden und somit den Endstellen END1, END2 zur Inanspruchnahme von Diensten zur Verfügung stehen.

Das System SYS kann des weiteren eine Verwaltungseinheit VER enthalten. Die Verwaltungseinheit VER beinhaltet beispielsweise einen Prozessor, mittels dessen sie das Verkehrsaufkommen im gesamten System SYS überwacht. So hat das System beispielsweise mehrere Einrichtungen EIN zur Zuweisung von Übertragungskanälen, die jeweils mit dem zentralen Server SER und der zentralen Verwaltungseinheit VER verbunden sind. Auf diese Weise lassen sich Überwachungsfunktionen in der Verwaltungseinheit VER zentralisieren, was mit einer Einsparung an technischem Aufwand einhergeht. Das Verwalten des Systems SYS wird üblicherweise auch als Management oder Netzwerkmanagement bezeichnet. So kann die Verwaltungseinheit beispielsweise die Überwachung der Funktionsfähigkeit der Übertragungskanäle durch z.B. Prüfmessungen an unbelegten Übertragungskanälen übernehmen und der Einrichtung EIN dann die Anweisung übermitteln einzelne Übertragungskanäle virtuell zu sperren, falls diese z.B. fehlerbehaftet sind und eine Reparatur notwendig ist. Die Einrichtung EIN beinhaltet zu diesem Zweck eine Schnittstelle S3 zur Verwaltungseinheit VER. Die Steuereinheit CTRL ist mit dieser Schnittstelle S3 verbunden und z.B. geeignet, über diese Schnittstelle S3 Information darüber zu empfangen, welche der Übertragungskanäle virtuell zu sperren sind. Die Schnittstelle S3 dient der Protokollumsetzung, als Sendeinheit zur Übertragung von Informationen von der Einrichtung EIN zur Verwaltungseinheit VER und als Empfangseinheit zum Empfang von Informationen von der Verwaltungseinheit VER.

Die Steuereinheit CTRL kann geeignet sein, über die Schnittstelle S3 die Information zu empfangen, welche Minimalwerte und welche Maximalwerte für welche Gruppe von Endstellen END1, END2 gelten sollen. Z.B. überwacht die Verwaltungseinheit VER das aktuelle Verkehrsaufkommen und ermittelt dadurch diejenigen Minimal- und Maximalwerte, die eine vorgegebenen Übertragungskapazität optimal ausnutzen und den Endstellen END1, END2 den maximalen Service bieten.

Die Endstellen END1, END2 sollen die Möglichkeit haben Verbindungen mit einer auswählbaren Anzahl von Übertragungskanäle herstellen zu können oder Dienste abzurufen für dessen Bereitstellung eine unterschiedliche Anzahl von Übertragungskanälen erforderlich ist. Die Steuereinheit CTRL wird zu diesem Zweck derart programmiert, daß sie z.B. geeignet ist, aus der Verbindungsanforderung einzelner Endstellen END1, END2 eine entsprechende Anzahl von angeforderten Übertragungskanälen zu detektieren und der jeweiligen Endstelle END1, END2 die detektierte Anzahl von Übertragungkanälen für die Dauer der Inanspruchnahme des jeweiligen Dienstes zuzuweisen.

Bei der Einrichtung EIN zur Zuweisung von Übertragungskanälen ist eine Schnittstelle S4 zum Server SER vorgesehen. Die Steuereinheit CTRL ist mit dieser Schnittstelle S4 verbunden und geeignet, die Information welche Übertragungskanäle sie welcher Endstelle END1, END2 zugewiesen hat über die Schnittstelle S4 dem Server SER zu übertragen, damit der Server SER weiß, in welchem Übertragungskanal er den abgerufenen Dienst zur Verfügung stellen soll. Die Schnittstelle S4 dient der Protokollumsetzung, als Sendeeinheit zur Übertragung von Informationen von der Einrichtung EIN zum Server SER und als Empfangseinheit zum Empfang von Informationen vom Server SER. Die Einrichtung kann auch vor der Zuweisung der Übertragungskanäle mit dem Server SER in Kontakt treten, um beispielsweise beim Server SER anzufragen, wieviel Übertragungskanäle für einen von einer Endstelle END1, END2 abgerufenen Dienst benötigt werden.

Beim Ausführungsbeispiel ist das System SYS ein rein elektrisches. Die Erfindung kann auch bei einem hybriden Glasfaser/Koaxialkabel System angewendet werden. Dazu ist die Einrichtung beispielsweise in dem Server SER angeordnet und die Schnittstelle S1 beinhaltet einen Elektrisch/Optisch-Umsetzer, um die Einrichtung EIN über ein HUB und mehrere BONTs mit einer Vielzahl von Endstellen END1 zu verbinden.

## Patentansprüche

1. Einrichtung ( EIN ) zum Zuweisen von Übertragungskanälen an Endstellen ( END1, END2 ) eines Dienste-auf-Abruf Systems ( SYS ), in welcher mindestens zwei Schnittstellen (S1, S2 ) zum Verbinden der Einrichtung ( EIN ) mit mehreren Endstellen ( END1, END2 ) vorgesehen sind, wobei jede Schnittstelle (S1, S2 ) über eine separate Leitung mit einer Gruppe von Endstellen ( END1, END2 ) verbunden ist, in welcher ein Speicher ( MEMO ) vorgesehen ist, in dem eine Zuweisungstabelle beinhaltend Einträge über aktuell verfügbare und aktuell belegte Übertragungskanäle zur Übertragung von von Endstellen ( END1, END2 ) abgerufenen Diensten abgespeichert ist, wobei eine variable Zuordnung zwischen Übertragungskanälen und Endstellen ( END1, END2 ) möglich ist, unabhängig von der Gruppenzugehörigkeit der Endstellen ( END1, END2 ), in welcher eine Steuereinheit ( CTRL ) vorgesehen ist, die mit den Schnittstellen (S1, S2 ) und dem Speicher ( MEMO ) verbunden ist, und wobei die Steuereinheit ( CRTL ) geeignet ist, Verbindungsanforderungen von einzelnen Endstellen ( END1, END2 ) zum Abruf von Diensten zu empfangen, den einzelnen Endstellen ( END1, END2 ) daraufhin jeweils mindestens einen Übertragungskanal zuzuweisen und diese Zuweisung im Speicher ( MEMO ) zu vermerken, sofern der mindestens eine Übertragungskanal im Speicher als aktuell verfügbar gilt und den einzelnen Endstellen ( END1, END2 ) mitzuteilen, daß momentan ein Verbindungsaufbau nicht möglich ist, sofern im Speicher (MEMO ) alle Übertragungskanäle als belegt gelten, **dadurch gekennzeichnet, daß** die Steuereinheit ( CTRL), die Zuweisung der Übertragungskanäle derart durchzufühnt, daß für jede Gruppe von Endstellen ( END1, END2 ) ein Minimalwert an zuweisbaren Übertragungskanälen nicht unterschritten und ein Maximalwert an zuweisbaren Übertragungskanälen nicht überschritten wird, wobei Minimalwert und Maximalwert ungleich sind, so daß für den Fall, daß aus einer Gruppe von Endstellen ( END1; END2 ) mehr Übertragungskanäle angefordert werden, als durch den Maximalwert vorgegeben sind, für diese Gruppe alle noch verfügbaren Übertragungskanäle als belegt gelten und daß für jede Gruppe von Endstellen ( END1; END2 ) stets eine minimale Anzahl von Übertragungskanälen zur freien Verfügung stehen.

2. Einrichtung ( EIN ) nach Anspruch 1, **dadurch gekennzeichnet, daß** die Steuereinheit ( CTRL ) geeignet ist, die Minimalwerte und die Maximalwerte dynamisch zu verändern.

3. Einrichtung ( EIN ) nach einem der vorherigen Ansprüche, **dadurch gekennzeichnet, daß** die Steuereinheit ( CTRL ) geeignet ist, einzelne Übertragungkanäle im Speicher ( MEMO ) zeitweise virtuell zu sperren, so daß diese Übertragungskanäle als belegt gelten.

4. Einrichtung ( EIN ) nach Anspruch 1 oder 2, **dadurch gekennzeichnet, daß** sie eine Schnittstelle ( S3 ) zu einer Verwaltungseinheit ( VER ) beinhaltet, und daß die Steuereinheit ( CTRL ) mit dieser Schnittstelle ( S3 ) verbunden ist und geeignet ist, über diese Schnittstelle ( S3 ) Information darüber zu empfangen, welche Minimalwerte und welche Maximalwerte für welche Gruppe von Endstellen ( END1, END2 ) gelten sollen.

5. Einrichtung ( EIN ) nach Anspruch 3, **dadurch gekennzeichnet, daß** sie eine Schnittstelle ( S3 ) zu einer Verwaltungseinheit ( VER ) beinhaltet, und daß die Steuereinheit ( CTRL ) mit dieser Schnittstelle ( S3 ) verbunden ist und geeignet ist, über diese Schnittstelle ( S3 ) die Information zu empfangen, welche der Übertragungskanäle virtuell zu sperren sind.

6. Einrichtung ( EIN ) nach einem der vorherigen Ansprüche, **dadurch gekennzeichnet, daß** die Steuereinheit geeignet ist, aus der Verbindungsanforderung einzelner Endstellen ( END1, END2 ) eine entsprechende Anzahl von angeforderten Übertragungskanälen zu detektieren und der jeweiligen Endstelle ( END1, END2 ) die detektierte Anzahl von Übertragungkanälen für die Dauer der Inanspruchnahme des jeweiligen Dienstes zuzuweisen.

7. Einrichtung ( EIN ) nach einem der vorherigen Ansprüche, **dadurch gekennzeichnet, daß** sie eine Schnittstelle ( S4 ) zu einem Server ( SER ) beinhaltet, und daß die Steuereinheit ( CTRL ) mit dieser Schnittstelle ( S4 ) verbunden ist und geeignet ist, die Information welche Übertragungskanäle sie welcher Endstelle ( END1, END2 ) zugewiesen hat über die Schnittstelle ( S4 ) dem Server ( SER ) zu übertragen.

## Claims

1. A facility (EIN) for assigning transmission channels to terminals (END1, END2) of a service-on-demand system (SYS), the facility (EIN) comprising at least two interfaces (S1, S2) for connecting the facility (EIN) to a plurality of terminals (END1, END2), each of the interfaces (S1, S2) being connected to a group of terminals (END1, END2) by a separate line, a memory (MEMO) which holds an assignment table containing entries on currently available and currently busy transmission channels for transmitting services requested from terminals (END1, END2), with a variable assignment of transmission channels to terminals (END1, END2) being possible regardless of which group the terminals (END1, END2) belong to, and a control unit (CTRL) which is connected to the interfaces (S1, S2) and the memory (MEMO), the control unit (CTRL) being adapted to receive connection requests from individual terminals (END1, END2) for requesting services, to assign at least one transmission channel to each of the individual terminals (END1, END2) in response thereto and store said assignment in the memory (MEMO) if in the memory the at least one transmission channel is considered currently available, and to notify the individual terminals (END1, END2) that the establishment of a connection is not possible for the time being if in the memory (MEMO) all transmission channels are considered busy, **characterized in that** the control unit (CTRL) carries out the assignment of the transmission channels in such a way that for each group of terminals (END1, END2), the number of assignable transmission channels does not fall below a minimum value and does not exceed a maximum value, with the minimum and maximum values being unequal, so that, if more transmission channels are requested from a group of terminals (END1; END2) than are specified by the maximum value, all transmission channels still available are considered busy for this group, and that a minimum number of transmission channels are always freely available to each group of terminals (END1; END2).

2. A facility (EIN) as claimed in claim 1, **characterized in that** the control unit (CTRL) is adapted to change the minimum and maximum values dynamically.

3. A facility (EIN) as claimed in either of the preceding claims, **characterized in that** the control unit (CTRL) is adapted to temporarily block individual transmission channels in the memory (MEMO) in a virtual fashion, so that these transmission channels are considered busy.

4. A facility (EIN) as claimed in claim 1 or 2, **characterized in that** it further comprises an interface (S3) to a management unit (VER), and that the control unit (CTRL) is connected to this interface (S3) and is adapted to receive via this interface (S3) information as to which minimum values and which maximum values are to apply to which group of terminals (END1, END2).

5. A facility (EIN) as claimed in claim 3, **characterized in that** it further comprises an interface (S3) to a management unit (VER), and that the control unit (CTRL) is connected to this interface (S3) and is adapted to receive via this interface (S3) information as to which of the transmission channels are to be blocked in a virtual fashion.

6. A facility (EIN) as claimed in any one of the preceding claims, **characterized in that** the control unit is adapted to detect a number of requested transmission channels in the connection requests from individual terminals (END1, END2), and to assign the detected number of transmission channels to the respective terminal (END1, END2) for the duration of the use of the respective service.

7. A facility (EIN) as claimed in any one of the preceding claims, **characterized in that** it further comprises an interface (S4) to a server (SER), and that the control unit (CTRL) is connected to this interface (S4) and is adapted to transmit information via this interface (S4) to the server (SER) as to which transmission channels it has assigned to which terminal (END1, END2).

## Revendications

1. Système (ATT) d'attribution de voies de communication pour équipements terminaux (ET1, ET2) d'un système de service à la demande (SYS) dans lequel au moins deux interfaces (S1, S2) sont prévues pour relier le système (ATT) à plusieurs équipements terminaux (ET1, ET2), chaque interface (S1, S2) étant raccordée par un câble distinct à un groupe d'équipements terminaux (ET1, ET2), dans lequel est prévue une mémoire (MEMO) dans laquelle est sauvegardée une table d'affectation contenant des enregistrements sur les voies de communication actuellement disponibles et actuellement occupées pour le transfert de services appelés par des équipements terminaux (ET1, ET2), une affectation variable entre les voies de communication et les équipements terminaux (ET1, ET2) étant possible, indépendamment de l'appartenance à un groupe des équipements terminaux (ET1, ET2), dans lequel est prévue une unité de commande (CTRL) reliée aux interfaces (S1, S2) et à la mémoire (MEMO), l'unité de commande (CTRL) étant en mesure de recevoir des demandes de connexion d'équipements terminaux (ET1, ET2) individuels pour l'appel de services, d'affecter ensuite aux équipements terminaux (ET1, ET2) individuels au moins une voie de communication, de repérer cette affectation dans la mémoire (MEMO) dans la mesure où au moins cette voie de communication est considérée comme actuellement accessible dans la mémoire, et d'informer les équipement terminaux (ET1, ET2) individuels que l'établissement d'une connexion est momentanément impossible, puisque toutes les voies de communication sont considérées comme occupées dans la mémoire (MEMO),
**caractérisé en ce que** l'unité de commande (CTRL) assure l'affectation des voies de communication de sorte que pour chaque groupe d'équipements terminaux (ET1, ET2) le nombre de voies de communication ne soit pas inférieur à la valeur minimale et supérieur à la valeur maximale de voies de communication affectables, la valeur minimale et la valeur maximale étant différentes, de sorte que si le nombre de voies de communication demandées par un groupe d'équipements terminaux (ET1, ET2) est supérieur à la valeur maximale prédéfinie, toutes les voies de communication encore disponibles pour ce groupe sont considérées comme occupées et que pour chaque groupe d'équipements terminaux (ET1, ET2) un nombre minimal de voies de communication est toujours maintenu disponible.

2. Système (ATT) selon la revendication 1 **caractérisé en ce que** l'unité de commande (CTRL) est en mesure de faire varier dynamiquement les valeurs minimales et maximales.

3. Système (ATT) selon l'une des revendications précédentes **caractérisé en ce que** l'unité de commande (CTRL) est en mesure de bloquer temporairement de manière virtuelle dans la mémoire (MEMO) des voies de communication individuelles afin que toutes les voies de communication soient considérées comme occupées.

4. Système (ATT) selon les revendications 1 et 2 **caractérisé en ce qu'**il contient une interface (S3) à l'unité de gestion (UGES) et **en ce que** l'unité de commande (CTRL) est reliée à cette interface (S3) et est en mesure de recevoir, via cette interface (S3), l'information indiquant quelles valeurs minimales et maximales sont applicables à quel groupe d'équipements terminaux (ET1, ET2).

5. Système (ATT) selon la revendication 3 **caractérisé en ce qu'**il contient une interface (S3) à une unité de gestion (UGES) et que l'unité de commande (CTRL) est reliée à cette interface (S3) et est capable de recevoir, via cette interface (S3), l'information indiquant quelles voies de communication doivent être bloquées virtuellement.

6. Système (ATT) selon l'une des précédentes revendications **caractérisé en ce que** l'unité de commande (CTRL) est en mesure de détecter à partir de la demande de connexion d'équipements terminaux (ET1, ET2) individuels, le nombre correspondant de voies de communication requises et d'affecter aux équipements terminaux (ET1, ET2) concernés le nombre détecté de voies de communication pour la durée de l'exécution du service considéré.

7. Système (ATT) selon l'une des précédentes revendications **caractérisé en ce qu'**il contient une interface (S4) au serveur (SER) et que l'unité de commande (CTRL) est reliée à cette interface (S4) et est en mesure de transférer au serveur (SER), via l'interface (S4), l'information indiquant quelles voies de communication sont attribuées à quel équipement terminal (ET1, ET2).
